# EUROPEAN PATENT SPECIFICATION

(11) **EP 4 273 832 B1**
(45) Date of publication and mention of the grant of the patent: **19.11.2025**
(21) Application number: 22171285.4
(22) Date of filing: 03.05.2022
(51) Int. Cl.: G08G 1/0965, G08G 1/16, B60W 50/14

(54) **A VEHICLE AND A SYSTEM AND METHOD FOR USE WITH A VEHICLE**
FAHRZEUG UND SYSTEM UND VERFAHREN ZUR VERWENDUNG MIT EINEM FAHRZEUG
VÉHICULE ET SYSTÈME ET PROCÉDÉ POUR UNE UTILISATION AVEC UN VÉHICULE

(43) Date of publication of application: 08.11.2023
(73) Proprietor: Bayerische Motoren Werke Aktiengesellschaft, 80809 München (DE)
(72) Inventor: Zaki, Tarek, 81829 München (DE)

(56) References cited:
- US-A1- 2015 110 285
- US-A1- 2016 355 125
- US-A1- 2022 048 529

## Description

The present invention relates to a vehicle and to a system and method for use in connection with a vehicle. The invention further relates to a computer program for carrying out the method.

The present invention can, in principle, be used in connection with any type of vehicle, in particular a motorized vehicle, including vehicles for surface transportation, such as (passenger) cars, lorries / trucks, busses or coaches, or rail-bound-vehicles such as trams. Given that the invention finds particular application in (passenger) cars, the invention will be described primarily in connection with cars, without being limited to this. In particular, one skilled in the art will not have any difficulties, guided by the present disclosure, to implement the invention in the context of vehicles other than cars.

A number of warning signals are employed by road users to warn or alert others, such as the sound of a horn, or the siren of an emergency vehicle (police, ambulance, fire engine etc.). Sometimes it is difficult for road users to identify where the warning signal is coming from, although in many situations this is important so that road users can react in an appropriate manner, e.g. by moving out of an emergency vehicle's way.

Generally speaking, the present invention seeks to address this issue by providing assistance in identifying where a warning signal is coming from.

US 2022/0048529 A1 discloses a system for providing in-vehicle emergency vehicle detection and positional alerts. This system primarily relies on a camera configured to obtain an image of surroundings of a first vehicle in order to detect and locate an emergency vehicle relative to the first vehicle. The first vehicle is also equipped with a microphone in order to assist with the detection of the siren of emergency vehicles.

It is an object of at least some embodiments of the present invention to provide an alternative technique to assist road users in identifying where a warning signal is coming from.

Aspects of the invention are set out in the claims.

The present disclosure provides a system for providing an indication of a warning signal according to claim 1.

The system can be built into the vehicle or may form part of the vehicle. However, the system can also be provided on its own and, for example, be supplied to vehicle manufacturers so that the system may be built into vehicles.

In the sense of the present disclosure, an "acoustic detection device" is intended to be understood to mean any device which can detect sound and which can provide an output signal based thereon so that this output signal may be used or processed by other devices or components. Although not limited thereto, an example of such an acoustic detection device is a microphone.

The processing unit of the first aspect of the present disclosure may, for example, comprise an onboard computer of the vehicle, or a component thereof. Examples of an indication of the direction, relative to the vehicle, of the location at which the acoustic warning signal originated will be described below. In particular, embodiments of how such an indication can be output will be described below. However, regardless of the type of indication or the way in which the indication is output, the indication may, for example, represent one, or in some embodiments several, directions with respect to the vehicle. These "directions" may, for example, be different directions in a horizontal plane, for example spaced at 45° or 90° intervals, but a different angular spacing can also be implemented. In the present description, and angular spacing of 45° will primarily be used, but one skilled in the art will not have any difficulties in implementing a smaller, or greater, angular spacing. Further, for the eight directions resulting from an angular spacing of 45°, the terms north, north-east, east, south-east, south, south-west, west and north-west will sometimes be used, whereby north corresponds to a direction straight ahead of the vehicle, east corresponds to a direction to the right of the vehicle and so on.

At least some embodiments of the present disclosure purely rely on an acoustic detection to localize the source of the warning signal, i.e. they do not require, nor rely on, the use of an optical detection device (e.g. a camera) to localize e.g. an emergency vehicle from which the warning signal may have originated.

In some embodiments, the plurality of acoustic detection devices comprises (at least) two microphones, in particular (at least) three microphones.

Whilst the use of more than two acoustic detection devices/microphones may provide more accurate or detailed results, the use of only two microphones may still provide some indication of the direction of the source of the warning signal. For example, if one microphone is mounted centrally at the front of the vehicle and one microphone is mounted centrally at the rear of the vehicle, then the detection of (substantially) equal amplitudes or times of arrival of the warning signal at the two microphones can be interpreted as an indication that the source of the warning signal is located sideways of the vehicle, either right (east) or left (west). The detection of (significantly) different amplitudes or times of arrival of the warning signal at the two microphones can be interpreted as an indication that the source of the warning signal is located more towards the front (north) or rear (south) of the vehicle.

The use of at least three microphones allows for a more detailed indication, i.e. by comparing the respective amplitudes or times of arrival of the acoustic warning signal as detected by the three microphones, the system is in principle able to provide an indication not only in terms of front, rear and sideways, but an indication of the direction with any desired precision. The detected direction can then be approximated to one of the eight directions described above. If the detected direction falls exactly between one of these eight directions, the indication to be output by the system can also take this into account, for example by indicating north-north-west for a detected direction between north and north-west, or by indicating both north and north-west.

In some embodiments, the plurality of acoustic detection devices comprises at least four microphones.

This may provide even more precise results than the use of three microphones, or may provide more certainty as regards the detected direction. In particular, the use of four microphones (or more) can provide a degree of redundancy. For example, it is possible for the processing unit to provide a detection result from each group of three microphones (there are four such groups in a set of four microphones), and if all four detection results indicate the same or a substantially similar direction, then the system may attach a higher confidence level to these results than in the case of substantially different detection results. The system may also output an indication of this confidence level. In particular if more than four microphones are used, then any detection result (from sub-groups of microphones) which is considered an outlier (i.e. (significantly) different from all other detection results) can also be ignored by the system.

In some embodiments, the processing unit is arranged to output the indication visually, audibly, or in the form of a signal, in particular in the form of an electric signal or an electromagnetic signal.

A visual output can for example be shown on a display device, such as a central information display (CID) or a head-up display, for example. The visual output can for example be a simple arrow pointing in a direction corresponding to the location of the source of the warning signal. Alternatively, a map of the vicinity of the vehicle could be shown in which the location of the source of the warning signal is indicated. Other visual indications are possible.

An audible indication can for example be output via a speaker of the vehicle or of a connected personal device (such as a smartphone, laptop or tablet computer). Such an audible indication could for example be in the form of spoken words, such as "warning signal from straight ahead" or "warning signal from north-west".

If the indication is output in the form of a signal, this can be transmitted to other (connected) devices, for example in a wired or wireless manner, and the indication can then be output on such (connected) devices, again visually or audibly, to the user. However, in some embodiments the indication is not ultimately output visually or audibly, but is provided to a navigation system of the vehicle. In particular, if the vehicle is an autonomous or highly automated vehicle, the signal may be used to control the path of the vehicle.

In some embodiments, the processing unit is arranged to distinguish between warning signals and other noise, and in particular the processing unit may be arranged to distinguish between a siren of an emergency vehicle and a horn.

For this purpose, the system may use audio classification algorithms (based on state-of-the-art Al algorithms) to classify detected sounds from the surroundings of the vehicle so as to distinguish between general ambient noise and warning signals. Similarly, such algorithms can be used to distinguish between different warning signals, e.g. a from a horn (as provided in virtually all road vehicles) and a siren of an emergency vehicle, and may further be used to distinguish between different types of emergency vehicles (police, ambulance, fire engine etc.).

In some embodiments, the processing unit is further arranged to output an indication, on the basis of the output signals from the acoustic detection devices, of:
- a distance of the source from the vehicle; and/or
- a speed of travel of the source relative to the vehicle; and/or
- a direction of travel of the source relative to the vehicle.

For this purpose, the output signals from the acoustic detection devices can be analyzed over a period of time, which may allow the processing unit to estimate a distance, speed of travel and/or direction of travel of the source.

In some embodiments, the processing unit is arranged to output the indication, or to cause the indication to be output, via a display and/or one or more loudspeakers of the vehicle, in particular one or more loudspeakers having a noise cancellation function.

Such a display or loudspeaker may be firmly built into the vehicle or may be removably connected to the vehicle in a wired or wireless manner - but may be proprietary to the vehicle (and may be operable only in connection with the vehicle in question).

In addition, or as an alternative, in some embodiments the processing unit is arranged to output the indication, or to cause the indication to be output, via a portable device, in particular a portable device having a noise cancellation function.

Such a portable device may in particular be a personal portable device, such as a smartphone, laptop or tablet computer.

Whether the device or devices via which the indication is to be output is/are part of, or proprietary to, the vehicle, or a personal device, the output device may comprise one or more loudspeakers, in particular headphones or a headset, and may in particular have a stereo or surround sound function.

In some embodiments, the processing unit is arranged to output the indication, or to cause the indication to be output, audibly in such a way that a user in the vehicle perceives the audible indication as coming from a direction which at least approximately corresponds to the direction, relative to the vehicle, of said location.

This can be particularly useful in connection with devices with surround sound function and, to a lesser extent, also with devices with a stereo function. The indication may then substantially reproduce the audible warning signal (or a modified version thereof) via the output device. Using stereo headphones as an example, and assuming that an ambulance approaches from the right, the processing unit would cause sound resembling the ambulance siren to be output predominantly or exclusively via the right-hand speaker of the headphones so that a user of the headphones can understand that an ambulance is approaching from the right, in particular without having to look at a display. Such an indication may sometimes also be easier to understand than spoken words (such as "ambulance approaching from the right"). An even better indication can be provided via devices with surround sound function, where a distinction can be made not only between left and right, but also front and rear (or e.g. the eight directions referred to above). This can be particularly useful in the case of output devices with noise cancellation (e.g. active or passive noise cancellation), where the original (external) warning signal may not easily be heard by a user, in particular if they are listening to music or other media content.

In the sense of the present disclosure, the expression "a direction which at least approximately corresponds to the direction, relative to the vehicle, of said location" is preferably intended to be understood in such a way that the angular difference between these two directions is at most, or less than, one of: 90°, 80°, 70°, 60°, 50°, 45°, 40°, 30° or 20°.

In a further development, the processing unit is arranged to take into account a position and/or orientation of the portable device relative to the vehicle in order to output the indication, or to cause the indication to be output, audibly in such a way that the user in the vehicle perceives the audible indication as coming from the direction which at least approximately corresponds to the direction, relative to the vehicle, of said location.

Again, this function is particularly useful in connection with devices with surround sound function, for example headphones with surround sound function. Using an example of an ambulance approaching from the right of the vehicle, the processing unit would cause a representation of an ambulance siren to be output via the headphones in such a way that the user would hear the sound as predominantly or exclusively coming from their right side - as long as their head is oriented in a forward direction with respect to the vehicle. However, if the user turns their head towards the right, then the processing unit would cause the representation of the ambulance siren to be output via the headphones in such a way that the user would hear the sound as predominantly or exclusively coming from the front (with respect to the orientation of their head).

To this end, in some embodiments, the system comprises an interface for receiving information regarding the position and/or orientation of the portable device relative to the vehicle, and the processing unit is arranged to generate the indication as a function of the information.

In such embodiments, the portable device could itself provide the information regarding the position and/or orientation of the portable device relative to the vehicle, for example using gyroscopes of the portable device and/or positional information obtained with the aid of a (satellite-based) positioning system such as GPS. This information can then be processed by the system. In particular, this information can be compared with information regarding the position and/or orientation of the vehicle so as to determine the position and/or orientation of the portable device relative to the vehicle. In addition, or as an alternative, the vehicle could obtain the information regarding the position and/or orientation of the portable device relative to the vehicle using e.g. one or more cameras or other detectors arranged to detect the position and/or orientation of the portable device.

The interface may be wired or wireless. A wired interface may, for example, be an electrical connector for connection to the portable device. If the portable device is hard-wired to the processing unit, the interface may be regarded as a point along the connection between the processing unit and the portable device.

In alternative embodiments, the vehicle provides information regarding the direction (with respect to the vehicle) of the source of the warning signal to the portable device without necessarily being aware of the position and/or orientation of the portable device relative to the vehicle. Using this information, the portable device can then determine, on the basis of its own knowledge of its own position and/or orientation, how to operate the loudspeakers of the portable device so that the indication is audibly output in such a way that the user in the vehicle perceives the audible indication as coming from the direction which at least approximately corresponds to the direction, relative to the vehicle, of the location of the source of the warning signal.

According to the claimed invention, the processing unit is arranged to cause windows or a roof of the vehicle to be closed in dependence upon the output signals from the acoustic detection devices.

This is based on the inventor appreciating that some people perceive the sound of a siren of an emergency vehicle as painful, sometimes to such an extent that they would normally cover their ears when they hear an emergency vehicle approaching. This may not be possible for a driver of a vehicle. By closing the windows and/or roof, the volume of the siren as perceived by an occupant of the vehicle can be reduced.

A number of implementations are possible for the closing of the windows/roof. For example, a first (volume) threshold may be set above which the windows/roof should be closed. The processing unit may be set up such that it causes the windows/roof to be closed if it detects a siren above this threshold.

As a refinement, the processing unit may take into account one or more of
- the extent to which any windows or the roof may be open
- the period of time that it would take to close the windows/roof
- the location and/or speed and/or direction of travel of the source of the siren
to ensure that the windows/roof will be closed by the time when the source of the siren would be (estimated to be) close enough for a second (volume) threshold to be exceeded. The second threshold may be different from, in particular higher than, the first threshold. The first and/or second threshold may be fixed or variable, in particular adjustable by a user of the vehicle.

As a further development, the processing unit may be set up such that it causes the windows/roof to be re-opened if it detects that the amplitude of the siren has dropped below a third threshold. The third threshold may be the same as the first or second thresholds, or it may be different from, in particular lower than, the first or second thresholds. Preferably, the processing unit is set up such that it causes the windows/roof to be re-opened only when it detects that the amplitude of the siren has first increased to a maximum value and/or has exceeded a particular threshold, for example the first or second threshold, and has thereafter dropped below the third threshold.

The processing unit may include, or communicate with, a memory device. The memory device may be used to store information as to whether any windows/the roof (and which ones) were open when the first or second threshold was exceeded. In this way, once the processing unit has determined that the windows/roof can be re-opened, it can re-open only those of the windows/roof which were open when the first or second threshold was exceeded. The memory device may also be used to store information as to how far any windows/the roof were open (i.e. their position) when the first or second threshold was exceeded. In this way, once the processing unit has determined that the windows/roof can be re-opened, it will cause the relevant ones of the windows/roof to be re-opened to (approximately) the same extent as before.

In relation to any, some or all of the (volume) thresholds discussed above, the determination as to whether the respective threshold has, or has not, been exceeded may comprise detecting/determining whether the threshold has, or has not, been exceeded (consistently) for a specified period of time, for example at least 2, 5, 10, 20, 50, 100, 200, 500 or 1000 milliseconds. This may avoid false positives. The same may apply, mutatis mutandis, to the determination as to whether the amplitude of the siren has, or has not, fallen below a particular (volume) threshold.

In a second aspect, the present disclosure provides a vehicle comprising the system according to the first aspect, or any embodiment thereof.

In a third aspect, the present disclosure provides a method of providing an indication of a warning signal according to claim 13.

In a fourth aspect, the present disclosure provides a computer program product according to claim 14.

The computer program may in particular be stored on a non-volatile data carrier. Preferably, this is a data carrier in the form of an optical data carrier or a flash memory module. This may be advantageous if the computer program as such is to be traded independently of a processor platform on which the one or more programs are to be executed. In a different implementation, the computer program may be provided as a file or a group of files on one or more data processing units, in particular on a server, and can be downloaded via a data connection, for example the Internet, or a dedicated data connection, such as for example a proprietary or a local network. In addition, the computer program may comprise a plurality of interacting, individual program modules.

The terms "first", "second", "third" and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, this does not exclude other elements or steps. Where an indefinite or definite article is used when referring to a singular noun, e.g. "a", "an" or "the", this includes a plural of that noun unless something else is specifically stated.

Further, unless expressly stated to the contrary, "or" refers to an inclusive "or" and not to an exclusive "or". For example, a condition "A or B" is satisfied by any one of the following: A is true (or present) and B is false (or not present), A is false (or not present) and B is true (or present), and both A and B are true (or present).

All connections mentioned in the present specification may be wired or wireless, unless this is explicitly excluded or technically impossible. The term "wired connection" encompasses not only connections established by, or using, a (metallic) wire, but also optical connections, preferably also any other type of physical connection allowing for the transmission of information.

Aspects and embodiments of the invention described or claimed herein can be combined with each other, and embodiments described in connection with one aspect of the invention can be combined with other aspects of the invention, unless such a combination is explicitly excluded or technically impossible.

Further advantages, features and applications of the present invention are provided in the following detailed description and the appended figures, wherein:
- **Fig. 1**: schematically shows a plan view of a vehicle according to an embodiment of the present invention.
- **Fig. 2**: shows a flow chart illustrating a method according to an embodiment of the present invention.
- **Fig. 3**: schematically shows a top view of the head of a person wearing headphones, in a first orientation.
- **Fig. 4**: schematically shows a top view of the head of the person from Fig. 3, in a second orientation.

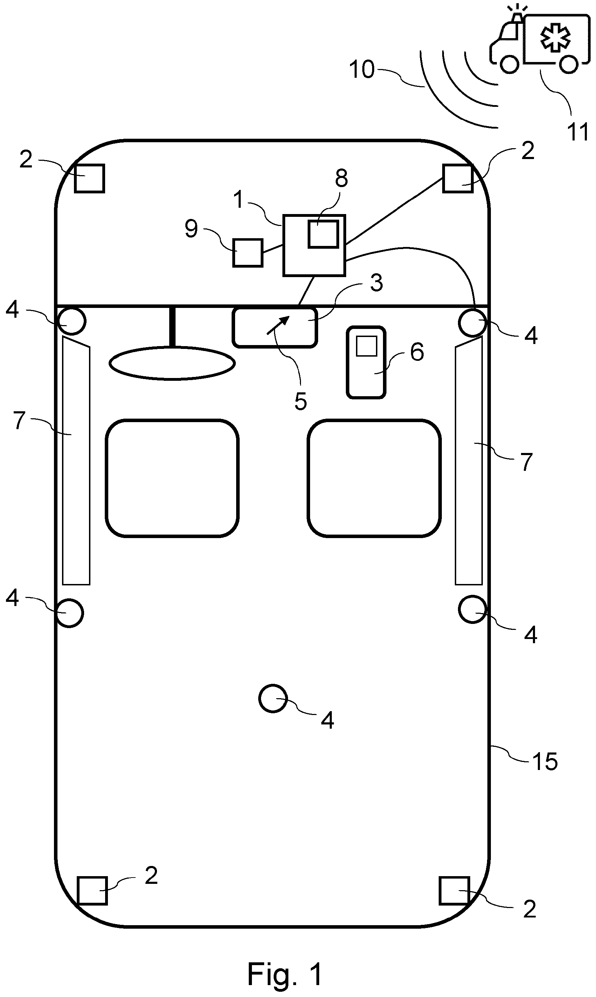

**Fig. 1** schematically shows a plan view of a vehicle 15 according to an embodiment of the present invention. The vehicle 15 is shown, by way of example, as a left-hand drive car, with only two front seats and a steering wheel shown (not labelled). The front of the vehicle is at the top of Fig. 1.

Vehicle 15 is equipped with a number of microphones 2, in the present example four microphones 2, which are arranged at each of the four corners of the vehicle 15. Each microphone 2 is mounted at or near the outer side of vehicle 15 so as to be able to detect ambient noise, including audible warning signals such as audible warning signal 10 emitted by emergency vehicles such as ambulance 11, as well as the sound of a "normal" horn of vehicles (not shown).

The microphones 2 are each connected to a processing unit 1, whereby, for the sake of simplicity, only one such connection is illustrated in Fig. 1 (from the front right-hand microphone 2 to the processing unit 1). Output signals from the microphones 2 (in response to detected sound) are transmitted to, and received by, the processing unit 1 via these connections. Processing unit 1 may comprise, or form part of, an onboard computer of vehicle 15.

Processing unit 1 is further connected to one or more loudspeakers 4 distributed at locations in the vehicle 15. In the example shown in Fig. 1, there are five such loudspeakers 4. Fig. 1 shows only one such connection, to a loudspeaker located towards the front on the right-hand side. The other loudspeakers 4 may be connected in like manner. Loudspeakers 4 may form part of a surround sound system.

Processing unit 1 is also connected to one or more displays, such as central information display (CID) 3.

Additionally, processing unit 1 is connected to a portable device 6. This may for example be a personal portable device 6, such as a smartphone, laptop or tablet computer or headphones, any of which may be connected to vehicle 15 in a wired or wireless manner, for example via Bluetooth^{®} or similar. Portable device 6 may also be proprietary to vehicle 15 and may be permanently or removably connected to vehicle 15 via a cable (not shown) or may communicate with processing unit 1 in a wireless manner.

Finally, a navigation system 9 is connected to processing unit 1.

In other embodiments, not all of these devices are present or connected. For example, embodiments are possible where only the display 3 is present (and connected to processing unit 1) and not, for example, a portable device 6.

In the example shown, processing unit 1 comprises an interface 8. Interface 8 may be a wired interface 8, for example an electrical connector for a cable-based connection with microphones 2, display 3, loudspeakers 4, portable device 6 and/or navigation system 9. If these devices are hard-wired to processing unit 1, then the interface 8 may be regarded as a point along the connection between these devices and processing unit 1. In addition, or as an alternative, interface 8 may be a wireless interface. In some embodiments, more than one such interface 8 is provided.

A system in accordance with the present invention need not include all of the devices explained above but may, for example, comprise only the processing unit 1 and two or more microphones 2, or even only the processing unit 1 adapted to communicate with other devices such as those described above.

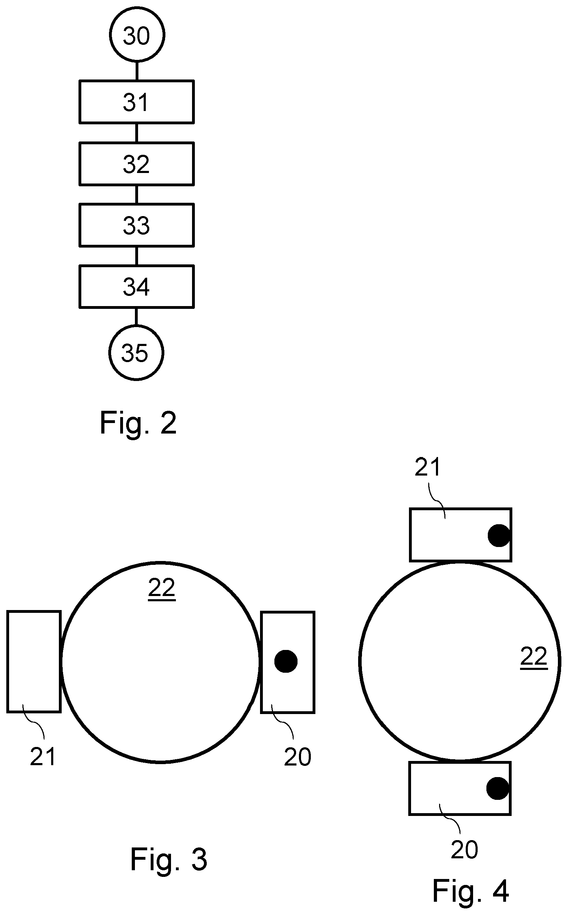

A method of operation of a system in accordance with the present invention will now be described with continued reference to Fig. 1 and further with reference to Fig. 2.

Fig. 2 shows a flow chart illustrating a method according to an embodiment of the present invention.

After the start (30) of the method, the loudspeakers 2 detect (31) ambient noise in the surroundings of vehicle 15 and provide (32) respective output signals to processing unit 1, where the output signals are processed (33) or analyzed. In particular, processing unit 1 may include circuitry or program components to differentiate between general ambient street noise and warning signals, optionally also to differentiate between different types of warning signals (horn / siren of an emergency vehicle / different types of sirens). Further, processing unit 1 compares the relative amplitudes and/or times of arrival of warning signal 10, in particular characteristic components thereof. Based on such a comparison, processing unit 1 outputs (34) an indication of the direction, relative to vehicle 15, of the location of the source 11 of the warning signal 10. Once the indication has been output, the method may end (35), or alternatively may be repeated.

In the example shown in Fig. 1, an ambulance 11 emitting audible warning signal (siren) 10 is at a location north-east of vehicle 15. A comparison on the basis of the relative amplitude of the warning signal 10 as detected at the four microphones 2 will be expected to indicate that the amplitude is strongest/greatest at the microphone 2 at the north-east corner of vehicle 15, weakest/smallest at the south-west corner of vehicle 15, and at an intermediate value at the north-west and south-east corners of vehicle 15. From this comparison, processing unit 1 can conclude that the source 11 of the warning signal 10 is located north-east of vehicle 15. Based on this, the processing unit 1 can output a corresponding indication.

A similar result can be obtained by comparing the times of arrival of warning signal 10 at the four microphones 2. The time of arrival at the north-east microphone would be expected to be the earliest, and at the south-west microphone the latest, with intermediate values at the north-west and south-east corners.

Corresponding results will be expected for other locations of source 11.

The indication of the direction of the source 11 of the warning signal 10 may be output visually, for example on display 3, for example in the form of an arrow 5 generally pointing in the direction of source 11, in this example towards north-east (or top right in Fig. 1). The same may apply to an output via portable device 6.

The indication can also be output audibly, via one or more loudspeakers 4, for example as spoken words, such as "siren at north-east". The same may apply to an output via portable device 6. Alternatively, the sound of the siren (or a modified version thereof) could be reproduced via the (surround sound) loudspeakers 4 such that occupants of the vehicle 15 would hear the siren from a direction consistent with the location of ambulance 11. The same may apply to an output via (surround sound) headphones worn by an occupant of vehicle 15.

Instead of, or in addition to, a visual or audible indication, an indication can also be transmitted from processing unit 1 to navigation system 9 in the form of a signal causing navigation system 9 to change the path of vehicle 15 or to change the speed of vehicle 15, for example to make way for emergency vehicle 11, and in particular so as to avoid a collision with emergency vehicle 11.

In a further development, the method described above is performed repeatedly, and from the manner in which the comparison result(s) develop(s) over time, processing unit 1 can estimate a distance of emergency vehicle 11 from vehicle 15 and/or a speed of travel and/or direction of travel of emergency vehicle 11 relative to vehicle 15. The result of this can also be indicated to an occupant of vehicle 15. In particular, the visual indication could differ depending on whether emergency vehicle 11 is moving towards, or away from, vehicle 15, or whether a collision would, or would not, occur if vehicle 15 and emergency vehicle 11 continued their paths at the same speed and in the same direction. This could be indicated, for example, by using different colors for the visual indication, such as a green arrow 5 for "emergency vehicle 11 moving away" or "no danger of collision" and a red arrow 5 for "emergency vehicle 11 approaching" or "danger of collision".

In a yet further development, the estimation result and/or values derived therefrom, such as (relative) speed, direction or distance of the source/emergency vehicle 11 of the warning signal 10, or "source moving away" or "source approaching" can be used to influence any audible warning signal which is (caused to be) generated by the vehicle 15 and emitted e.g. via loudspeakers 4 of vehicle 15 or via a portable device 6. For example, such audible warning signal which is (caused to be) generated by the vehicle 15 could be influenced in such a way that the volume or the pitch (frequency) of this signal is increased as the source 11 comes closer, and decreased as source 11 moves away. This finds particular application in connection with vehicles 15 or portable devices 6 which have a noise cancellation function. Again, if the audible warning signal is output via a surround sound system, it can be output in such a manner that an occupant of vehicle 15 can perceive it as coming from a direction consistent with the direction of the source 11 relative to vehicle 15.

Processing unit 1 can also use the information regarding the position and relative direction and/or distance between emergency vehicle 11 and vehicle 15 and/or regarding the speed and/or direction of travel of emergency vehicle 11 relative to vehicle 15 to operate or control windows 7 or other openings such as a retractable roof (not shown) of vehicle 15. To this end, a volume threshold may be programmed into processing unit 1, in particular in an adjustable manner, and if processing unit 1 determines that this volume threshold has been exceeded, in particular (consistently) for at least a specified period of time, or that this (or a different) volume threshold will likely be exceeded, then processing unit 1 causes windows and/or other openings to be closed. To this end, processing unit 1 can also take into account the extent to which any windows and/or other openings are open (with appropriate information being stored in a memory, not shown), as well as how long it might take to close the windows and/or other openings so as to ensure that they will be closed by the time the relevant threshold is (estimated to be) exceeded. Processing unit 1 can also re-open such windows or the roof after processing unit 1 has determined that the volume or amplitude of the warning signal 10 has dropped below the first, second or a different threshold, in particular (consistently) for at least a specified period of time.

A further embodiment will now be described with continued reference to Fig. 1 and further with reference to Figs. 3 and 4.

**Fig. 3** schematically shows a top view of the head 22 of a person wearing headphones, in a first orientation, and **Fig. 4** schematically shows a top view of the head 22 of the person from Fig. 3, in a second orientation. The reference number 22 is respectively placed towards the direction in which head 22 is facing. In other words, in the orientation of Fig. 3, the head is turned towards the top of the figure, whereas in Fig. 4, the head is turned towards the right.

Figs. 3 and 4 schematically show headphones worn by the person, whereby reference number 20 indicates a right-hand portion of the headphones and reference number 21 indicates a left-hand portion of the headphones. In the embodiment shown, the headphones are headphones with surround sound function. We now assume that an ambulance is detected towards the right of vehicle 15. The person shown in Fig. 3 is initially facing in the direction of travel of vehicle 15, i.e. towards the front of vehicle 15. Surround sound headphones 20, 21 transmit information regarding the position and/or orientation of the headphones relative to vehicle 15 to processing unit 1, using built-in gyroscopes or similar (not shown) of the headphones, either constantly, intermittently or on demand. Using this information, the processing unit 1 can send an appropriate instruction to the headphones so that an audible signal, which may resemble a siren, will be output via the headphones from a "direction" that is consistent with the direction of emergency vehicle 11 relative to the vehicle 15, i.e. in the case of Fig. 3 predominantly or exclusively from the right side 20, as indicated by a black circle. Then, as shown in Fig. 4, the person turns their head 22 towards the right. Information regarding the changed orientation of the headphones is accordingly transmitted from the headphones to processing unit 1, and accordingly the processing unit can send an appropriate instruction to the headphones so that the audible signal will be output from a "direction" corresponding to the front of both the right side 20 and the left side 21, as again indicated by black circles, so that the audible signal is again perceived by the person from a "direction" that is consistent with the direction of emergency vehicle 11 relative to the vehicle 15.

In a variant, information regarding the orientation of the headphones is not transmitted to, or at least not taken into account by, processing unit 1. Instead, processing unit 1 informs the headphones that an audible signal resembling the siren is to be output from a direction which corresponds to the right-hand side of the vehicle 15. Using this information, and being aware (through built-in gyroscopes or similar of the headphones) of the orientation of the headphones, the headphones can determine from which side the audible signal is to be output to meet this requirement. The audible signal is then output as shown in Figs. 3 and 4.

While at least one example embodiment of the present invention has been described above, it has to be noted that a great number of variations thereto exist. Furthermore, it is appreciated that any described example embodiments only illustrate non-limiting examples of how the present invention can be implemented and that it is not intended to limit the scope, the application or the configuration of the apparatuses and methods described herein. Rather, the preceding description will provide the person skilled in the art with instructions for implementing at least one example embodiment of the invention, whereby it has to be understood that various changes of functionality and the arrangement of the elements of the example embodiment can be made without deviating from the subject-matter defined by the appended claims, as well as their legal equivalents.

### List of Reference Signs

- 1: processing unit
- 2: acoustic detection device / microphone
- 3: display / central information display (CID)
- 4: loudspeakers / surround sound system
- 5: indication / arrow
- 6: portable / personal device
- 7: window
- 8: (wireless) interface
- 9: navigation system
- 10: audible warning signal
- 11: source of warning signal / emergency vehicle
- 15: vehicle
- 20: headphones (right side)
- 21: headphones (left side)
- 22: head of user
- 30 - 35: method steps

## Claims

1. A system (1, 2) for providing an indication (5) of a warning signal (10), the system (1, 2) being for use in connection with a vehicle (15), the warning signal (10) being an acoustic warning signal (10) originating from a source (11) at a location external to the vehicle (15), the system (1, 2) comprising:
a plurality of acoustic detection devices (2) mounted on the vehicle (15) and detecting the acoustic warning signal (10) to provide respective output signals; and
a processing unit (1) for processing the output signals from the acoustic detection devices (2);
wherein the processing unit (1) is arranged to output an indication (5) of the direction, relative to the vehicle (15), of said location on the basis of:
- a comparison of the respective amplitudes of the acoustic warning signal (10) as detected by the plurality of acoustic detection devices (2); and/or
- a comparison of the respective times of arrival of the acoustic warning signal (10) as detected by the plurality of acoustic detection devices (2);
**characterized in that**
the processing unit (1) is arranged to cause windows (7) or a roof of the vehicle (15) to be closed in dependence upon the output signals from the acoustic detection devices (2).

2. The system (1, 2) according to claim 1, wherein the plurality of acoustic detection devices (2) comprises at least two microphones (2), in particular at least three microphones (2).

3. The system (1, 2) according to claim 2, wherein the plurality of acoustic detection devices (2) comprises at least four microphones (2).

4. The system (1, 2) according to any one of the preceding claims, wherein the processing unit (1) is arranged to output the indication (5) visually, audibly, or in the form of a signal, in particular in the form of an electric signal or an electromagnetic signal.

5. The system (1, 2) according to any one of the preceding claims, wherein the processing unit (1) is arranged to distinguish between warning signals (10) and other noise, in particular wherein the processing unit (1) is arranged to distinguish between a siren (10) of an emergency vehicle (11) and a horn.

6. The system (1, 2) according to any one of the preceding claims, wherein the processing unit (1) is further arranged to output an indication (5), on the basis of the output signals from the acoustic detection devices (2), of:
- a distance of the source (11) from the vehicle (15); and/or
- a speed of travel of the source (11) relative to the vehicle (15); and/or
- a direction of travel of the source (11) relative to the vehicle (15).

7. The system (1, 2) according to any one of the preceding claims, wherein the processing unit (1) is arranged to output the indication (5), or to cause the indication (5) to be output, via a display (3) and/or one or more loudspeakers (4) of the vehicle (15), in particular one or more loudspeakers (4) having a noise cancellation function.

8. The system (1, 2) according to any one of the preceding claims, wherein the processing unit (1) is arranged to output the indication (5), or to cause the indication (5) to be output, via a portable device (6, 20, 21), in particular a portable device (6, 20, 21) having a noise cancellation function.

9. The system (1, 2) according to any one of the preceding claims, wherein the processing unit (1) is arranged to output the indication (5), or to cause the indication (5) to be output, audibly in such a way that a user (22) in the vehicle (15) perceives the audible indication as coming from a direction which at least approximately corresponds to the direction, relative to the vehicle (15), of said location.

10. The system (1, 2) according to claim 9 as dependent from claim 8, wherein the processing unit (1) is arranged to take into account a position and/or orientation of the portable device (20, 21) relative to the vehicle (15) in order to output the indication (5), or to cause the indication (5) to be output, audibly in such a way that the user in the vehicle (15) perceives the audible indication (5) as coming from the direction which at least approximately corresponds to the direction, relative to the vehicle (15), of said location.

11. The system (1, 2) according to claim 10, wherein the system (1, 2) comprises an interface (8) for receiving information regarding the position and/or orientation of the portable device (6, 20, 21) relative to the vehicle (15), and wherein the processing unit (1) is arranged to generate the indication (5) as a function of the information.

12. A vehicle (15) comprising the system (1, 2) according to any one of the preceding claims.

13. A method of providing an indication (5) of a warning signal (10), the method being for use in connection with a vehicle (15), the warning signal (10) being an acoustic warning signal (10) originating from a source (11) at a location external to the vehicle (15), the method comprising:
detecting (31), via a plurality of acoustic detection devices (2) mounted on the vehicle (15), the acoustic warning signal (10) and providing (32) respective output signals;
processing (33) the output signals from the acoustic detection devices (2); and
outputting (34) an indication (5) of the direction, relative to the vehicle (15), of said location on the basis of:
- a comparison of the respective amplitudes of the acoustic warning signal (10) as detected by the plurality of acoustic detection devices (2); and/or
- a comparison of the respective times of arrival of the acoustic warning signal (10) as detected by the plurality of acoustic detection devices (2);
**characterized in that**
the method further comprises causing windows (7) or a roof of the vehicle (15) to be closed in dependence upon the output signals from the acoustic detection devices (2).

14. A computer program product comprising a program code which is stored on a computer readable medium which, when the program is executed by a computer, cause the computer to carry out the steps of claim 13.

## Patentansprüche

1. System (1, 2) zum Bereitstellen einer Anzeige (5) eines Warnsignals (10), wobei das System (1, 2) zur Verwendung in Verbindung mit einem Fahrzeug (15) bestimmt ist, wobei das Warnsignal (10) ein akustisches Warnsignal (10) ist, das von einer Quelle (11) an einem Ort außerhalb des Fahrzeugs (15) ausgeht, wobei das System (1, 2) umfasst:
eine Vielzahl von am Fahrzeug (15) montierten akustischen Erfassungsvorrichtungen (2), die das akustische Warnsignal (10) erfassen, um jeweilige Ausgangssignale bereitzustellen; und
eine Verarbeitungseinheit (1) zum Verarbeiten der Ausgangssignale von den akustischen Erfassungsvorrichtungen (2);
wobei die Verarbeitungseinheit (1) dazu eingerichtet ist, eine Anzeige (5) der Richtung des genannten Ortes relativ zum Fahrzeug (15) auszugeben auf der Grundlage von:
• einem Vergleich der jeweiligen Amplituden des akustischen Warnsignals (10), wie es von der Vielzahl von akustischen Erfassungsvorrichtungen (2) erfasst wird; und/oder
• einem Vergleich der jeweiligen Ankunftszeiten des akustischen Warnsignals (10), wie es von der Vielzahl von akustischen Erfassungsvorrichtungen (2) erfasst wird;
**dadurch gekennzeichnet, dass** die Verarbeitungseinheit (1) dazu eingerichtet ist, das Schließen von Fenstern (7) oder eines Daches des Fahrzeugs (15) in Abhängigkeit von den Ausgangssignalen der akustischen Erfassungsvorrichtungen (2) zu bewirken.

2. System (1, 2) nach Anspruch 1, wobei die Vielzahl von akustischen Erfassungsvorrichtungen (2) mindestens zwei Mikrofone (2), insbesondere mindestens drei Mikrofone (2) umfasst.

3. System (1, 2) nach Anspruch 2, wobei die Vielzahl von akustischen Erfassungsvorrichtungen (2) mindestens vier Mikrofone (2) umfasst.

4. System (1, 2) nach einem der vorhergehenden Ansprüche, wobei die Verarbeitungseinheit (1) dazu eingerichtet ist, die Anzeige (5) visuell, akustisch oder in Form eines Signals, insbesondere in Form eines elektrischen Signals oder eines elektromagnetischen Signals, auszugeben.

5. System (1, 2) nach einem der vorhergehenden Ansprüche, wobei die Verarbeitungseinheit (1) dazu eingerichtet ist, zwischen Warnsignalen (10) und anderen Geräuschen zu unterscheiden, insbesondere wobei die Verarbeitungseinheit (1) dazu eingerichtet ist, zwischen einer Sirene (10) eines Notfallfahrzeugs (11) und einer Hupe zu unterscheiden.

6. System (1, 2) nach einem der vorhergehenden Ansprüche, wobei die Verarbeitungseinheit (1) ferner dazu eingerichtet ist, eine Anzeige (5) auf der Grundlage der Ausgangssignale von den akustischen Erfassungsvorrichtungen (2) auszugeben von:
• einem Abstand der Quelle (11) vom Fahrzeug (15); und/oder
• einer Bewegungsgeschwindigkeit der Quelle (11) relativ zum Fahrzeug (15); und/oder
• einer Bewegungsrichtung der Quelle (11) relativ zum Fahrzeug (15).

7. System (1, 2) nach einem der vorhergehenden Ansprüche, wobei die Verarbeitungseinheit (1) dazu eingerichtet ist, die Anzeige (5) über eine Anzeige (3) und/oder einen oder mehrere Lautsprecher (4) des Fahrzeugs (15), insbesondere einen oder mehrere Lautsprecher (4) mit einer Geräuschunterdrückungsfunktion, auszugeben oder deren Ausgabe zu veranlassen.

8. System (1, 2) nach einem der vorhergehenden Ansprüche, wobei die Verarbeitungseinheit (1) dazu eingerichtet ist, die Anzeige (5) über ein tragbares Gerät (6, 20, 21), insbesondere ein tragbares Gerät (6, 20, 21) mit einer Geräuschunterdrückungsfunktion, auszugeben oder deren Ausgabe zu veranlassen.

9. System (1, 2) nach einem der vorhergehenden Ansprüche, wobei die Verarbeitungseinheit (1) dazu eingerichtet ist, die Anzeige (5) akustisch so auszugeben oder deren Ausgabe zu veranlassen, dass ein Benutzer (22) im Fahrzeug (15) die akustische Anzeige als aus einer Richtung kommend wahrnimmt, die zumindest annähernd der Richtung des genannten Ortes relativ zum Fahrzeug (15) entspricht.

10. System (1, 2) nach Anspruch 9 in Abhängigkeit von Anspruch 8, wobei die Verarbeitungseinheit (1) dazu eingerichtet ist, eine Position und/oder Ausrichtung des tragbaren Geräts (20, 21) relativ zum Fahrzeug (15) zu berücksichtigen, um die Anzeige (5) akustisch so auszugeben oder deren Ausgabe zu veranlassen, dass der Benutzer im Fahrzeug (15) die akustische Anzeige (5) als aus der Richtung kommend wahrnimmt, die zumindest annähernd der Richtung des genannten Ortes relativ zum Fahrzeug (15) entspricht.

11. System (1, 2) nach Anspruch 10, wobei das System (1, 2) eine Schnittstelle (8) zum Empfangen von Informationen bezüglich der Position und/oder Ausrichtung des tragbaren Geräts (6, 20, 21) relativ zum Fahrzeug (15) umfasst, und wobei die Verarbeitungseinheit (1) dazu eingerichtet ist, die Anzeige (5) als Funktion der Informationen zu erzeugen.

12. Fahrzeug (15), das das System (1, 2) nach einem der vorhergehenden Ansprüche umfasst.

13. Verfahren zum Bereitstellen einer Anzeige (5) eines Warnsignals (10), wobei das Verfahren zur Verwendung in Verbindung mit einem Fahrzeug (15) bestimmt ist, wobei das Warnsignal (10) ein akustisches Warnsignal (10) ist, das von einer Quelle (11) an einem Ort außerhalb des Fahrzeugs (15) ausgeht, wobei das Verfahren umfasst:
Erfassen (31) des akustischen Warnsignals (10) über eine Vielzahl von am Fahrzeug (15) montierten akustischen Erfassungsvorrichtungen (2) und Bereitstellen (32) jeweiliger Ausgangssignale;
Verarbeiten (33) der Ausgangssignale von den akustischen Erfassungsvorrichtungen (2); und
Ausgeben (34) einer Anzeige (5) der Richtung des genannten Ortes relativ zum Fahrzeug (15) auf der Grundlage von:
• einem Vergleich der jeweiligen Amplituden des akustischen Warnsignals (10), wie es von der Vielzahl von akustischen Erfassungsvorrichtungen (2) erfasst wird; und/oder
• einem Vergleich der jeweiligen Ankunftszeiten des akustischen Warnsignals (10), wie es von der Vielzahl von akustischen Erfassungsvorrichtungen (2) erfasst wird;
**dadurch gekennzeichnet, dass** das Verfahren ferner das Bewirken des Schließens von Fenstern (7) oder eines Daches des Fahrzeugs (15) in Abhängigkeit von den Ausgangssignalen der akustischen Erfassungsvorrichtungen (2) umfasst.

14. Computerprogrammprodukt, das einen Programmcode umfasst, der auf einem computerlesbaren Medium gespeichert ist, der, wenn das Programm von einem Computer ausgeführt wird, den Computer veranlasst, die Schritte nach Anspruch 13 auszuführen.

## Revendications

1. Système (1, 2) pour fournir une indication (5) d'un signal d'avertissement (10), le système (1, 2) étant destiné à être utilisé en relation avec un véhicule (15), le signal d'avertissement (10) étant un signal d'avertissement acoustique (10) provenant d'une source (11) située à l'extérieur du véhicule (15), le système (1, 2) comprenant :
une pluralité de dispositifs de détection acoustique (2) montés sur le véhicule (15) et
détectant le signal d'avertissement acoustique (10) pour fournir des signaux de sortie respectifs ; et
une unité de traitement (1) pour traiter les signaux de sortie provenant des dispositifs de détection acoustique (2) ;
dans lequel l'unité de traitement (1) est agencée pour délivrer une indication (5) de la direction, par rapport au véhicule (15), de ladite localisation sur la base de :
• une comparaison des amplitudes respectives du signal d'avertissement acoustique (10) tel que détecté par la pluralité de dispositifs de détection acoustique (2) ; et/ou
• une comparaison des temps d'arrivée respectifs du signal d'avertissement acoustique (10) tel que détecté par la pluralité de dispositifs de détection acoustique (2) ;
**caractérisé en ce que** l'unité de traitement (1) est agencée pour provoquer la fermeture des fenêtres (7) ou d'un toit du véhicule (15) en fonction des signaux de sortie des dispositifs de détection acoustique (2).

2. Système (1, 2) selon la revendication 1, dans lequel la pluralité de dispositifs de détection acoustique (2) comprend au moins deux microphones (2), en particulier au moins trois microphones (2).

3. Système (1, 2) selon la revendication 2, dans lequel la pluralité de dispositifs de détection acoustique (2) comprend au moins quatre microphones (2).

4. Système (1, 2) selon l'une quelconque des revendications précédentes, dans lequel l'unité de traitement (1) est agencée pour délivrer l'indication (5) visuellement, audiblement, ou sous forme d'un signal, en particulier sous forme d'un signal électrique ou d'un signal électromagnétique.

5. Système (1, 2) selon l'une quelconque des revendications précédentes, dans lequel l'unité de traitement (1) est agencée pour distinguer entre les signaux d'avertissement (10) et d'autres bruits, en particulier dans lequel l'unité de traitement (1) est agencée pour distinguer entre une sirène (10) d'un véhicule d'urgence (11) et un klaxon.

6. Système (1, 2) selon l'une quelconque des revendications précédentes, dans lequel l'unité de traitement (1) est en outre agencée pour délivrer une indication (5), sur la base des signaux de sortie des dispositifs de détection acoustique (2), de :
• une distance de la source (11) par rapport au véhicule (15) ; et/ou
• une vitesse de déplacement de la source (11) par rapport au véhicule (15) ; et/ou
• une direction de déplacement de la source (11) par rapport au véhicule (15).

7. Système (1, 2) selon l'une quelconque des revendications précédentes, dans lequel l'unité de traitement (1) est agencée pour délivrer l'indication (5), ou pour faire délivrer l'indication (5), via un affichage (3) et/ou un ou plusieurs haut-parleurs (4) du véhicule (15), en particulier un ou plusieurs haut-parleurs (4) ayant une fonction d'annulation du bruit.

8. Système (1, 2) selon l'une quelconque des revendications précédentes, dans lequel l'unité de traitement (1) est agencée pour délivrer l'indication (5), ou pour faire délivrer l'indication (5), via un dispositif portable (6, 20, 21), en particulier un dispositif portable (6, 20, 21) ayant une fonction d'annulation du bruit.

9. Système (1, 2) selon l'une quelconque des revendications précédentes, dans lequel l'unité de traitement (1) est agencée pour délivrer l'indication (5), ou pour faire délivrer l'indication (5), de manière audible de telle sorte qu'un utilisateur (22) dans le véhicule (15) perçoive l'indication audible comme provenant d'une direction qui correspond au moins approximativement à la direction, par rapport au véhicule (15), de ladite localisation.

10. Système (1, 2) selon la revendication 9 dépendante de la revendication 8, dans lequel l'unité de traitement (1) est agencée pour prendre en compte une position et/ou une orientation du dispositif portable (20, 21) par rapport au véhicule (15) afin de délivrer l'indication (5), ou de faire délivrer l'indication (5), de manière audible de telle sorte que l'utilisateur dans le véhicule (15) perçoive l'indication audible (5) comme provenant de la direction qui correspond au moins approximativement à la direction, par rapport au véhicule (15), de ladite localisation.

11. Système (1, 2) selon la revendication 10, dans lequel le système (1, 2) comprend une interface (8) pour recevoir des informations concernant la position et/ou l'orientation du dispositif portable (6, 20, 21) par rapport au véhicule (15), et dans lequel l'unité de traitement (1) est agencée pour générer l'indication (5) en fonction des informations.

12. Véhicule (15) comprenant le système (1, 2) selon l'une quelconque des revendications précédentes.

13. Procédé de fourniture d'une indication (5) d'un signal d'avertissement (10), le procédé étant destiné à être utilisé en relation avec un véhicule (15), le signal d'avertissement (10) étant un signal d'avertissement acoustique (10) provenant d'une source (11) située à l'extérieur du véhicule (15), le procédé comprenant :
la détection (31), via une pluralité de dispositifs de détection acoustique (2) montés sur le véhicule (15), du signal d'avertissement acoustique (10) et la fourniture (32) de signaux de sortie respectifs ;
le traitement (33) des signaux de sortie provenant des dispositifs de détection acoustique (2) ; et
la délivrance (34) d'une indication (5) de la direction, par rapport au véhicule (15), de ladite localisation sur la base de :
• une comparaison des amplitudes respectives du signal d'avertissement acoustique (10) tel que détecté par la pluralité de dispositifs de détection acoustique (2) ; et/ou
• une comparaison des temps d'arrivée respectifs du signal d'avertissement acoustique (10) tel que détecté par la pluralité de dispositifs de détection acoustique (2) ;
**caractérisé en ce que** le procédé comprend en outre le fait de provoquer la fermeture des fenêtres (7) ou d'un toit du véhicule (15) en fonction des signaux de sortie des dispositifs de détection acoustique (2).

14. Produit de programme informatique comprenant un code de programme qui est stocké sur un support lisible par ordinateur qui, lorsque le programme est exécuté par un ordinateur, amène l'ordinateur à effectuer les étapes de la revendication 13.
